# EUROPÄISCHE PATENTSCHRIFT

(11) **EP 3 115 641 B1**
(45) Veröffentlichungstag und Bekanntmachung des Hinweises auf die Patenterteilung: **30.10.2024**
(21) Anmeldenummer: 16157763.0
(22) Anmeldetag: 29.02.2016
(51) Int. Cl.: F16G 3/04, F16G 3/02, F16G 11/02, F16G 3/00, B65G 15/30, F16G 11/04

(54) **GURT ODER GURTSEGMENT**
BELT OR BELT SEGMENT
CEINTURE ET ELEMENT DE CEINTURE

(30) Priorität: 08.07.2015 DE 102015212745
(43) Veröffentlichungstag der Anmeldung: 11.01.2017
(73) Patentinhaber: ContiTech Deutschland GmbH, 30175 Hannover (DE)
(72) Erfinder: Hüls, Achim, 30890 Barsinghausen (DE); Möschen-Siekmann, Michael, 37176 Nörten-Hardenberg (DE); Behrens, Carsten, 37434 Bilshausen (DE)
(74) Vertreter: Continental Corporation

(56) Entgegenhaltungen:
- WO-A1-01/38756
- DE-B- 1 218 816
- DE-U1- 202010 015 791
- US-A- 3 105 390
- US-A- 3 327 359
- US-A- 3 810 278
- US-A1- 2013 213 774
- US-A1- 2015 075 951

## Beschreibung

Die Erfindung betrifft einen Gurt oder ein Gurtsegment gemäß dem Anspruch Endlos geschlossene Gurte stellen ringförmige Elemente dar, welche z.B. als Antriebsgurte wie z.B. Keilriemen zur Kraftübertragung verwendet werden können. Sie können auch als Fördergurte dazu verwendet werden, z.B. lose Schüttgüter zu transportieren.

Derartige Gurte können auch verwendet werden, um als Skidgleitgurte sog. Skids zu transportieren. Unter einem Skid wird ein Werkstückträger verstanden, auf dem ein Werkstück gelagert werden kann, um dann mittels des kraftschlüssigen und bzw. oder formschlüssigen Kontakts des Werkstückträgers mit der Oberfläche des Gleitgurts in der Horizontalen bewegt zu werden. Beispielsweise können Fahrzeuge bei der Montage auf diese Art und Weise entlang der Arbeitsstationen bewegt werden. Hierbei werden üblicherweise zwei parallel laufende Skidgleitgurte verwendet, die den Skid z.B. an seinen Außenkanten bzw. Kufen erfassen und bewegen können.

Diese Gurte laufen i.Allg. um einen Antrieb und weitere Führungs- bzw. Stützrollen herum, um die Antriebsleistung auf ein Abtriebselement zu übertragen (Keilriemen) oder um die Antriebsleistung zum Materialtransport zu nutzen (Fördergurt). Hierzu weisen diese Gurte zum einen eine vorbestimmte Elastizität auf, welche z.B. durch die Verwendung eines Elastomermaterials wie z.B. Gummi als Basismaterial des Gurtes erreicht werden kann. Zum anderen weisen diese Gurte üblicherweise in Längsrichtung einen oder mehrere Festigkeitsträger zur Übertragung der Zugkräfte in Laufrichtung des Gurtes auf. Dies können z.B. Stahlseile sein, welche eine besonders hohe Kraftübertragung erlauben. Auch Textilgewebe sind als Festigkeitsträger üblich.

Skidgleitgurte laufen ferner in dem Bereich des Obertrums auf einem gleitfähigen Untergrund, über den sie gezogen werden. Hierdurch können die Skidgleitgurte den Skid aufnehmen und mit sich mitbewegen, weil sie durch den Untergrund flächig abgestützt werden. Um auf dem Untergrund möglichst gut gleiten zu können, weisen die Unterseite bzw. Innenseiten der Skidgleitgurte eine Oberflächenbeschaffenheit auf, die den Reibwert dieser Gurtseite reduzieren kann. Beispielsweise werden hierzu gleitfähige Gewebe eingesetzt. Hierdurch soll erreicht werden, dass zwischen der Unterseite des Skidgleitgurtes und der Oberfläche des Untergrunds weniger Reibung entstehen kann und der Gurt mit weniger Antriebsleistung von den Antriebsrollen bewegt werden kann.

Derartige Gurte können z.B. als Keilriemen teilweise bereits geschlossen hergestellt werden. In den meisten Fällen z.B. als Fördergurte wie z.B. als Skidgleitgurte werden die Gurte aufgrund ihrer Länge in Längsrichtung üblicherweise offen, d.h. als länglicher Körper, herstellt und auch so zum Ort der Anwendung transportiert. Dort werden sie dann endlos geschlossen. Dabei kann ein Gurt über seine beiden Enden in sich selbst endlos geschlossen werden oder es können wenigstens zwei Gurtsegmente hintereinander angeordnet und miteinander zu einem Gurt endlos geschlossen werden. Das endlose Schließen kann z.B. durch Zusammenvulkanisieren der beiden Enden erfolgen, was jedoch ein zerstörungsfreies Trennen der Enden und damit Öffnen des Gurtes z.B. bei Verschleiß oder Beschädigung ausschließt. Ferner ist hierzu ein großer Aufwand vor Ort der Anwendung erforderlich.

Daher ist es bekannt, die Enden der Festigkeitsträger an den beiden Enden des offenen Gurtes vom Elastomermaterial freizulassen bzw. freizulegen und diese mechanisch zu verbinden. Dies kann z.B. dadurch erfolgen, dass die jeweiligen Enden in einem jeweils gemeinsamen Kopplungselement eingeklemmt und die beiden Kopplungselemente z.B. scharnierartig mittels eines Kopplungsstabes miteinander verbunden werden. Durch die Aufteilung dieser mechanischen Klemmverbindung auf zwei Kopplungselemente, die dann als Gelenk gegeneinander verdrehbar sind, soll die Biegsamkeit des Gurtes als Ganzes möglichst wenig eingeschränkt werden. Dies kann insbesondere bei kleinen Umlenkradien erforderlich sein, wie sie bei Skidgleitgurten üblicherweise auftreten. Dokument US3810278 offenbart eine ähnliche Riemenkupplung.

Die WO 2012 038 155 A1 sowie die WO 2013 174 666 A1 zeigen einen Gurt aus elastomerem Werkstoff mit einer Festigkeitsträgerlage aus in Längsrichtung des Gurtes verlaufenden, parallel zueinander angeordneten Stahlseilen. Die Stahlseilenden sind jeweils in einem Verbindungselement in Form eines Gurtendekörpers durch Verpressen kraftschlüssig eingeklemmt. Die beiden Verbindungselemente weisen jeweils zueinander hin gerichtete und einander seitlich überlappende zinnenartige Vorsprünge auf, die mit Querbohrungen versehen sind. Durch die Querbohrungen kann ein Kopplungsstab geführt werden, gegenüber dem sich die beiden Gurtendekörper gegeneinander drehen können. Hierdurch wird der Gurt endlos geschlossen und die beiden Gurtenden miteinander scharnierartig gekoppelt. Die Verbindungselemente bzw. Scharnierplatten sind einteilig und aus Metall ausgebildet.

Nachteilig ist hierbei, dass üblicherweise auch die Skids aus Metall wie z.B. Stahl ausgebildet sind. Hierdurch kann es bei der Anwendung passieren, dass der Skid mit der metallischen Unterseite seiner Kufen vollständig oder teilweise auf einem Verbindungselement bzw. auf beiden Verbindungselementen aufliegt. Das Gewicht des Skids kann die Verbindungselemente an diesen Stellen stärker auf den Untergrund drücken als dies sonst der Fall wäre. Durch diesen lokalen Druck kann es an diesen Stellen in dieser Situation zu einem Kontakt der metallischen Verbindungselemente anstelle des übrigen gleitfähigen Materials der Unterseite bzw. der Innenseite des Gurtes mit dem Untergrund kommen. Hierdurch kann an diesen Stellen die Reibung des Skidgleitgurts gegenüber dem Untergrund erhöht werden. Dies kann die zur Bewegung des Gurts bzw. Skids erforderliche Antriebsleistung erhöhen sowie zu einem erhöhten Verschleiß der Verbindungselemente und Beschädigungen des Untergrunds führen.

Falls lediglich ein Verbindungselemente von zwei parallel Skidgleitgurten durch eine Kufe auf den Untergrund gedrückt wird, kann es auf diese Weise zu einer einseitigen Bremswirkung kommen. Diese einseitige Bremswirkung kann dazu führen, dass bei der Bewegung des Skidgleitgurtes die beiden Seiten bzw. Kufen des gemeinsam getragenen Skids unterschiedlich stark durch den Skidgleitgurt bewegt werden und hierdurch verrutschen können. Hierdurch kann der Skid im Betrieb verrutschen, insbesondere sich um seine Hochachse verdrehen, und so seinen Transport stören. Möglicherweise kann der verdrehte Skid mit anderen Gegenständen kollidieren oder sogar Personen verletzen. Das Verrutschen kann insbesondere beim Anfahren bzw. Anhalten des Skidgleitgurts auftreten. Eine Aufgabe der vorliegenden Erfindung ist es, einen Gurt oder ein Gurtsegment der eingangs beschriebenen Art bereit zu stellen, welcher bzw. welches nach innen gerichtet ein möglichst einheitliches Reibverhalten aufweist. Insbesondere sollen unterschiedliche Reibpaarungen vermieden werden. Insbesondere soll eine ungewollte Gleitbewegung bzw. Drehung auf der Gurtoberseite zu transportierender Objekte wie z.B. eines Skids vermieden werden.

Die Aufgabe wird erfindungsgemäß durch einen Gurt bzw. ein Gurtsegment mit den Merkmalen gemäß Anspruch 1 gelöst. Vorteilhafte Weiterbildungen sind in den Unteransprüchen beschrieben.

Somit betrifft die vorliegende Erfindung einen Gurt oder ein Gurtsegment mit einer Mehrzahl von in Längsrichtung verlaufenden und parallel zueinander angeordneten Festigkeitsträgern. Die Festigkeitsträger sind vorzugsweise Stahlseile, welche hohe Zugkräfte übertragen können. Unter Längsrichtung ist die Richtung zu verstehen, in der der Gurt bzw. das Gurtsegment endlos geschlossen ist bzw. geschlossen werden kann. Hierzu senkrecht erstreckt sich die Querrichtung, welche auch als Breite bezeichnet werden kann, sowie die Höhe bzw. Dicke des Gurtes bzw. Gurtsegments. Ein Gurt kann durch die Verbindung seiner beiden Enden endlos geschlossen werden oder mehrere Gurtsegmente können über die Verbindung ihrer Enden zu einem Gurt endlos geschlossen werden.

Der Gurt oder das Gurtsegment weist ferner ein Verbindungselement auf, welches ein Ende des Gurtes bzw. des Gurtsegments bildet und zur Verbindung mit einem weiteren Verbindungselement des anderen Endes des Gurts bzw. mit einem Ende eines weiteren Gurtsegments ausgebildet ist. Die Enden der Festigkeitsträger können von dem Verbindungselement gehalten werden. Das Verbindungselement ist vorzugsweise scharnierartig ausgebildet, so dass es mit einem entsprechenden zweiten Verbindungselement des anderen Endes des Gurtes bzw. eines Endes eines weiteren Gurtsegments ein drehbares Gelenk ausbilden kann. Hierdurch kann ermöglicht werden, dass sich dieser Kopplungsbereich einer Umlenkung des geschlossenen Gurtes um z.B. eine Trommel besser anpassen kann.

Vorzugsweise wird diese Kopplung zwischen den Verbindungselementen durch einen Kopplungsstab realisiert, der in Querrichtung durch Bohrungen der zinnenartigen Vorsprünge der Verbindungselemente hindurchgeführt und gesichert ist. Hierdurch kann diese Verbindung auch lösbar ausgebildet sein.

Der Gurt oder das Gurtsegment ist dadurch gekennzeichnet, dass das Verbindungselement an seiner gurtinneren Seite zumindest abschnittsweise einen vorbestimmten Reibwert aufweist. Unter der gurtinneren Seite ist die Seite des geschlossenen Gurtes zu verstehen, welche nach innen gerichtet ist. Auf dieser Seite kann der endlos geschlossene Gurt im Betrieb auf einem Untergrund aufliegen bzw. über einen Untergrund bewegt werden, um Gegenstände wie z.B. ein Skid auf seiner gegenüberliegenden gurtäußeren Seite zu transportieren. Hierzu muss die Reibung zwischen der Unterseite des Gurts und der Oberfläche des Untergrunds vorbestimmt und vorzugsweise möglichst gering sein, um die Bewegung des Gurts möglichst wenig zu behindern.

Damit diese vorbestimmte und vorzugsweise möglichst geringe Reibung möglichst ununterbrochen über die gesamte Länge des Gurtes vorhanden ist, wird erfindungsgemäß ein vorbestimmter Reibwert an der gurtinneren Seite des Verbindungselements vorgesehen. Gemeint ist hiermit, dass der Reibwert des Verbindungselements nach innen hin geringer ist als der Reibwert des Verbindungselement an sich, d.h. als der Reibwert des Materials des Grundkörpers des Verbindungselements, welches i.Allg. aus Metall besteht. Hierdurch kann ein Gleiten des Gurts mit seiner Unterseite an der Stelle des Gurtes, an der die Verbindung mittels Verbindungselementen angeordnet ist, begünstigt werden. Dieses Gleiten ist insbesondere dann wünschenswert, falls eine Kufe z.B. des Skids auf ein Verbindungselement drückt und hierdurch die Reibung der Unterseite des Verbindungselements zur Oberfläche des Untergrunds hierdurch erhöhen kann.

Hierzu kann ein Verbindungselement der beiden Verbindungselemente erfindungsgemäß ausgeführt sein, um diese Vorteile zu erreichen. Es können auch beide Verbindungselemente entsprechend ausgeführt sein. Dies kann jeweils abschnittsweise oder vollständig der Fall sein. Hierbei kommt es auf den Anwendungsfall an, so dass der vorbestimmte Reibwert zumindest abschnittsweise erreicht wird, um ein Gleiten zu begünstigen. Hierbei ist auch die Ausdehnung des flächigen Kontakts mit der Oberfläche des Untergrunds zu berücksichtigen.

Die Einstellung des vorbestimmten Reibwertes kann durch die Beschaffenheit der nach innengerichteten Oberfläche des Verbindungselements erreicht werden. Dies kann durch das Material selbst bzw. eine Beschichtung geschehen. Auch kann die Struktur der Oberfläche z.B. durch Schleifen, Polieren oder dergleichen entsprechend ausgestaltet sein.

Gemäß einem Aspekt der vorliegenden Erfindung entspricht der Reibwert der gurtinneren Seite des Verbindungselements zumindest abschnittsweise dem Reibwert der Gurtinnenseite. Hierdurch kann in identisches Reib- bzw. Gleitverhalten über die gesamte Gurtlänge erreicht werden.

Gemäß einem weiteren Aspekt der vorliegenden Erfindung weist das Verbindungselement einen Gleitbelag auf, welcher zumindest abschnittsweise, vorzugsweise im Wesentlichen, vorzugsweise vollständig, die gurtinnere Seite des Verbindungselements bildet und welcher den vorbestimmten Reibwert aufweist. Auf diese Weise kann der vorbestimmte Reibwert unabhängig vom Material des Verbindungselements durch das Material bzw. die Oberflächenbeschaffenheit der Abdeckung vorgenommen werden. Vorteilhaft ist hierbei, dass das Verbindungselement auf seine Funktion der Verbindung der Gurtenden ausgelegt werden kann, ohne das Problem der Reibung bzw. des Gleitens berücksichtigen zu müssen. Diese Aufgabenstellung kann der Auslegung des Gleitbelags zugrunde gelegt werden, so dass der Gleitbelag hieraufhin optimiert werden kann.

Gemäß einem weiteren Aspekt der vorliegenden Erfindung kann der Gleitbelag stoffschlüssig von dem Verbindungselement gehalten werden. Hierdurch kann eine einfache Verbindung geschaffen werden, welche ferner nicht zerstörungsfrei lösbar und damit vergleichsweise sicher ist. Vorteilhaft ist hierbei auch, dass der Gleitbelag bei der Herstellung des Verbindungselements auf dieses aufgebracht werden kann, was ansonsten nach einer Montage an der Gurtenden später aufwendiger und ggfs. gar nicht in gleicher Qualität möglich sein könnte.

Gemäß einem weiteren Aspekt der vorliegenden Erfindung können die Enden der Festigkeitsträger mit wenigstens einem Klemmkörper kraftschlüssig verbunden werden, wobei der Klemmkörper von dem Verbindungselement wenigstens in Längsrichtung formschlüssig gehalten werden kann. Die geklemmte Verbindung zwischen den Enden der Festigkeitsträger mit dem Klemmkörper kann vorzugsweise durch Verpressen erfolgen.

Diesem Aspekt der vorliegenden Erfindung liegt dabei der Gedanke zu Grunde, auf diese Weise eine Funktionstrennung der Verbindung der Enden der Festigkeitsträger mit dem Verbindungselement zu erreichen. Denn aus dem Stand der Technik ist es bisher bekannt, die Enden der Festigkeitsträger in dem Material des Verbindungselements direkt durch Verpressen einzuklemmen und so eine kraftschlüssige Verbindung direkt zwischen den Festigkeitsträgern und dem Verbindungselement herzustellen.

Erfindungsgemäß erfolgt nun die geklemmte Verbindung der Enden der Festigkeitsträger in dem Klemmkörper, der einen separaten Körper gegenüber dem Verbindungselement darstellt. Der Klemmkörper seinerseits kann dann vom Verbindungselement derart aufgenommen werden, dass eine formschlüssige Verbindung in Längsrichtung hergestellt werden kann. Auf diese Weise können sich die Kräfte, die zur Herstellung der kraftschlüssigen Verbindung zwischen den Enden der Festigkeitsträger mit dem Klemmkörper z.B. durch Verpressen erforderlich sind, nicht mehr auf das Verbindungselement auswirken und dieses ungewollt deformieren. Hierdurch kann der bisher auftretende Verzug des Verbindungselements vermieden werden. Dies kann auch den hierdurch erzeugten erhöhten Abrieb zweier Verbindungselemente aneinander reduzieren oder sogar vermeiden und damit die Lebensdauer des Gurtes bzw. des Gurtsegments bzw. deren Kopplung erhöhen. Gleichzeitig kann die hohe Haltbarkeit der kraftschlüssigen Verbindung beibehalten werden.

Vorteilhaft ist ferner, dass die Materialien der Klemmkörper und Verbindungselemente nun auf den jeweiligen Zweck optimiert ausgelegt werden können. Hierzu können unterschiedliche Materialien verwendet werden, z.B. ein Stahl mit guter plastischer Verformbarkeit bei gleichzeitiger hoher Festigkeit für den Klemmkörper und ein harter oder härtbarer Stahl mit hoher Verschleißfestigkeit und Zugfestigkeit für das Verbindungselement. Hierdurch kann die Verformbarkeit des Klemmkörpers beim Verpressen und die Stabilität des Verbindungselements bei Zugbelastung jeweils optimiert werden.

Vorzugsweise ist das Verbindungselement derart ausgebildet, dass es sich vollständig in den Querschnitt des Gurtes bzw. des Gurtsegments integrieren lässt. Hierunter ist zu verstehen, dass das Verbindungselement weder in der Höhe noch in der Breite über die Kontur des Gurtes bzw. Gurtsegments hinausragt. Auf diese Weise kann ein Einfluss auf das Laufverhalten des endlos geschlossenen Gurtes vermieden werden.

Vorzugsweise ist das Material des Klemmkörpers relativ zum Material des Verbindungselements weicher. Unter "weich" ist hierbei eine bessere Fließfähigkeit oder plastische Verformbarkeit des Materials des Klemmkörpers in Relation zum Material des Verbindungselements zu verstehen. Beispielsweise kann als Material des Klemmkörpers z.B. ein rostfreier Edelstahl wie z.B. V4A verwendet werden. Als Material des Verbindungselements kann z.B. ein harter oder härtbarer Stahl eingesetzt werden. Das vergleichsweise weiche Material des Klemmkörpers begünstigt ein gutes Verpressen mit den Enden des Festigkeitsträgers wie z.B. Stahlseile. Dies kann die Klemmwirkung bei gleicher Presskraft erhöhen bzw. die erforderliche Presskraft zur Herstellung der kraftschlüssigen Verbindung reduzieren. Das Material des Verbindungselements kann durch seine vergleichsweise hohe Härte hohe Belastungen aufnehmen und hierdurch einem Verzug entgegenwirken. Ebenso kann hierdurch grundsätzlich der Verschleiß durch Abrieb reduziert werden.

Vorteilhaft ist dabei auch, dass das Verbindungselement durch ein Guß- oder Schmiedeteil hergestellt werden kann, was die Herstellungskosten reduzieren kann. Der Klemmkörper kann gleichzeitig durch einen kleinen und geometrisch einfachen Körper realisiert werden, was ebenfalls die Herstellungskosten reduzieren kann.

Vorzugsweise sind wenigstens zwei Enden der Festigkeitsträger mit einem gemeinsamen Klemmkörper kraftschlüssig verbunden. Ein größerer Klemmkörper kann einfacher herzustellen, zu handhaben und zu montieren sein, was die Herstellung- und Montagekosten reduzieren kann.

Vorzugweise sind alle Enden der Festigkeitsträger in einem gemeinsamen Klemmkörper eingeklemmt. Dies hat den Vorteil, dass die eingeklemmten Festigkeitsträger gemeinsam einfacher zu handhaben sind.

Vorzugsweise sind wenigstens zwei Enden der Festigkeitsträger jeweils einzeln mit einem Klemmkörper kraftschlüssig verbunden. Hierdurch können kleinere Klemmkörper verwendet werden, was die Variantenvielfalt reduzieren kann.

Vorzugweise sind alle Enden der Festigkeitsträger jeweils mit einem einzelnen Klemmkörper verbunden. Hierdurch kann ein einheitlicher Klemmkörper wiederholend verwendet werden, auch für Gurte bzw. Gurtsegmente mit einer unterschiedlichen Anzahl von Festigkeitsträgern, was die Herstellungskosten reduzieren kann. Mit anderen Worten kann darauf verzichtet werden, unterschiedliche Klemmkörper für unterschiedliche Gurte bzw. Gurtsegmente herstellen und bereitstellen zu müssen.

Gemäß einem weiteren Aspekt der vorliegenden Erfindung weist das Verbindungselement wenigstens eine Klemmkörperaufnahme auf, in der wenigstens ein mit einem Klemmkörper versehenes Ende eines Festigkeitsträgers aufgenommen und wenigstens in Längsrichtung formschlüssig gehalten werden kann. Durch die Klemmkörperaufnahme innerhalb der Abmaße des Verbindungselements kann ein Platz geschaffen werden, an dem der Klemmkörper vom Verbindungselement aufgenommen werden kann, um formschlüssig Halt zu finden.

Vorzugsweise ist die Klemmkörperaufnahme ausgebildet, einen Klemmkörper aufzunehmen, mit dem die Enden mehrerer Festigkeitsträger kraftschlüssig verbunden sind. Hierdurch kann ein Platz zur Aufnahme eines derartigen Klemmkörpers durch das Verbindungselement geschaffen werden, welche aufgrund ihrer Größe einfacher und schneller herzustellen sein kann als mehrere kleinere Klemmkörperaufnahmen.

Vorzugsweise ist die Klemmkörperaufnahme ausgebildet, einen Klemmkörper aufzunehmen, mit dem das Ende eines Festigkeitsträgers kraftschlüssig verbunden ist. Hierdurch wird ein Platz zur Aufnahme eines derartigen Klemmkörpers durch das Verbindungselement geschaffen, d.h. für sehr kleine Klemmkörper, die jeweils nur ein einzelnes Ende eines Festigkeitsträgers in sich aufnehmen können.

Gemäß einem weiteren Aspekt der vorliegenden Erfindung ist die gurtinnere Seite des Verbindungselements im Bereich der Klemmkörperaufnahme frei von dem Gleitbelag. Demnach kann der Gleitbelag lediglich in Längsrichtung auf einer Seite neben der Klemmkörperaufnahme oder auf beiden Seiten angeordnet sein. In Querrichtung gilt dies ebenso. Der Gleitbelag kann auch flächig auf der gurtinneren Seite des Verbindungselements angeordnet und lediglich im Bereich der Klemmkörperaufnahmen unterbrochen angeordnet sein. Dies alles kann den Vorteil haben, dass der Gleitbelag vor der Montage des Verbindungselements an einem Gurtende aufgebracht werden und durch das Verpressen der Klemmkörper in der Klemmkörperaufnahme, was üblicherweise durch Werkzeuge von beiden Seiten geschieht, nicht beschädigt werden kann. Dies könnte seine Gleitwirkung reduzieren bzw. aufheben.

Gemäß einem weiteren Aspekt der vorliegenden Erfindung weist das Verbindungselement wenigstens zwei Klemmkörperaufnahmen auf, in denen jeweils wenigstens ein mit einem Klemmkörper versehenes Ende eines Festigkeitsträgers aufgenommen und wenigstens in Längsrichtung formschlüssig gehalten werden kann, wobei die beiden Klemmkörperaufnahmen in Querrichtung durch einen in Längsrichtung verlaufenden Steg voneinander getrennt sind. Auf diese Weise kann die Übertragung von Zugkräften in Längsrichtung verbessert werden, weil diese nicht nur über die seitlichen Kanten des Verbindungselements sondern auch durch die Stege zwischen den Klemmkörperaufnahmen direkt übertragen werden können. Hierdurch kann die Verformung des Verbindungselements reduziert werden.

Gemäß einem weiteren Aspekt der vorliegenden Erfindung weist das Verbindungselement wenigstens eine Festigkeitsträgerdurchführung auf, durch die wenigstens ein Festigkeitsträger in Längsrichtung in eine Klemmkörperaufnahme geführt werden kann. Der Bereich des Verbindungselements, durch den ein Festigkeitsträger durch die Festigkeitsträgerdurchführung hindurch in die Klemmkörperaufnahme austreten kann, bildet den Anschlag des Klemmkörpers für den formschlüssigen Halt des Verbindungselements.

Gemäß einem weiteren Aspekt der vorliegenden Erfindung ist die Festigkeitsträgerdurchführung als Bohrung oder als Nut durch das Verbindungselement ausgebildet ist.

Durch die Ausführung der Festigkeitsträgerdurchführung als Bohrung kann die Festigkeitsträgerdurchführung ringsherum vom Material des Verbindungselements umgeben sein, so dass die Kräfte des Formschlusses gleichmäßig übertragen werden können. Hierdurch kann eine größere Stabilität erzeugt werden. Dabei ist es erforderlich, dass die Enden der Festigkeitsträger durch die Bohrungen hindurch in die Klemmkörperaufnahme gesteckt werden, wo sie in entsprechende Aufnahmen des Klemmkörpers eingeführt und dann dort verpresst werden können.

Durch die Ausführung der Festigkeitsträgerdurchführung als Nut ist das Material des Verbindungselements in der Höhe unterbrochen, so dass die mit dem Klemmkörper versehenen Enden der Festigkeitsträger von einer Seite in die Nuten eingelegt werden können. Hierbei wird gleichzeitig der Klemmkörper in die Klemmkörperaufnahme eingelegt. Auf diese Weise kann das Verpressen unabhängig vom Verbindungselement vor diesem Schritt erfolgen.

Gemäß einem weiteren Aspekt der vorliegenden Erfindung kann eine Abdeckung die Nut und bzw. oder die Klemmkörperaufnahme senkrecht zur Längsrichtung von der gurtäußeren Seite des Verbindungselements verschließen kann. Auf diese Weise können die in die Nuten eingeführten Festigkeitsträger bzw. der in der Klemmkörperaufnahme aufgenommene Klemmkörper dort durch die Abdeckung geschützt werden. Weiterhin können durch die Abdeckung die Reibungswerte des Gelenkes an die Oberfläche des Gurtes, d.h. an seiner gurtäußeren Seite, und die optische Erscheinung des Gurtes beeinflusst werden.

Gemäß einem weiteren Aspekt der vorliegenden Erfindung ist die Festigkeitsträgerdurchführung in Längsrichtung in entgegengesetzter Richtung zu den Enden der Festigkeitsträger aufgeweitet ausgebildet. Auf diese Weise kann insbesondere bei einer Biegung des Gurtes z.B. an einer Trommel ein Einknicken der Festigkeitsträger vermieden werden. Mit anderen Worten kann erreicht werden, dass die Festigkeitsträger immer in der neutralen Phase verlaufen können. Dies vermeidet Beschädigungen der Festigkeitsträger und erhöht deren Lebensdauer bzw. die Lebensdauer des Gurtes.

Vorzugsweise ist die Aufweitung der Festigkeitsträgerdurchführung kegelförmig ausgebildet. Hierdurch kann der zuvor beschriebenen Vorteile einfach umgesetzt werden. Dies gilt ebenso für eine hyperbolische Form der Aufweitung.

Gemäß einem weiteren Aspekt der vorliegenden Erfindung weist der Gurt bzw. das Gurtsegment einen elastomeren Grundkörper auf, in dem die Festigkeitsträger eingebettet sind, wobei die Enden der Festigkeitsträger von dem Material des elastomeren Grundkörpers freigelegt und bzw. oder freigelassen sind. Das Material des elastomeren Grundkörpers ist vorzugsweise ein vulkanisiertes Gummi. Auf diese Weise kann ein elastischer Gurt bzw. ein elastisches Gurtsegment geschaffen werden. Hierbei ist unter dem Freilegen bzw. Freilassen der Enden der Festigkeitsträger ein äußeres Freilegen von dem elastomeren Material des Grundkörpers zu verstehen, so dass die Enden der Festigkeitsträger wie z.B. Stahlseile nach außen blank erscheinen und aufgrund ihres geringen Querschnitts in die Klemmkörperaufnahmen des Klemmkörpers eingeführt und dort verpresst werden können.

Gemäß einem weiteren Aspekt der vorliegenden Erfindung weist das Verbindungselement an seiner gurtinneren Seite eine halbkreisförmige Einbuchtung auf. Diese Einbuchtung ist halbschalenförmig ausgebildet und entspricht in ihrem Radius dem Radius z.B. einer Trommel, auf dem der Gurt bzw. dessen Kopplungsbereich umgelenkt werden kann. Diese Einbuchtung erleichtert das Abrollen auf der Trommel und kann ein Einknicken der Festigkeitsträger vermeiden helfen, so dass die Festigkeitsträger auch beim Abrollen stets in der neutralen Phase bleiben können. Hierdurch kann ein Einknicken der Festigkeitsträger vermieden und deren Lebensdauer bzw. die Lebensdauer des Gurtes erhöht werden.

Die vorliegende Erfindung betrifft auch ein Verbindungselement zur Verwendung mit einem Gurt oder Gurtsegment wie zuvor beschrieben.

Ausführungsbeispiele und weitere Vorteile der Erfindung werden nachstehend im Zusammenhang mit den folgenden Figuren erläutert. Darin zeigt:
- Fig. 1: eine perspektivische schematische Darstellung eines Transportsystems mit einem erfindungsgemäßen Gurt zur Bewegung eines Skids in Längsrichtung;
- Fig. 2: eine perspektivische schematische Darstellung eines Transportsystems mit einem erfindungsgemäßen Gurt zur Bewegung eines Skids in Querrichtung;
- Fig. 3: eine perspektivische schematische Darstellung eines erfindungsgemäßen Verbindungselements;
- Fig. 4: eine schematische Draufsicht auf einen erfindungsgemäßen Gurt mit gekoppelten Verbindungselementen mit einem Gleitbelag gemäß einer ersten Ausführungsform;
- Fig. 5: eine schematische perspektivische Ansicht von schräg oben auf ein einzelnes Gurtende gemäß dem ersten Ausführungsbeispiel; und
- Fig. 6: eine schematische perspektivische Ansicht von schräg oben auf ein einzelnes Gurtende gemäß einem zweiten Ausführungsbeispiel.

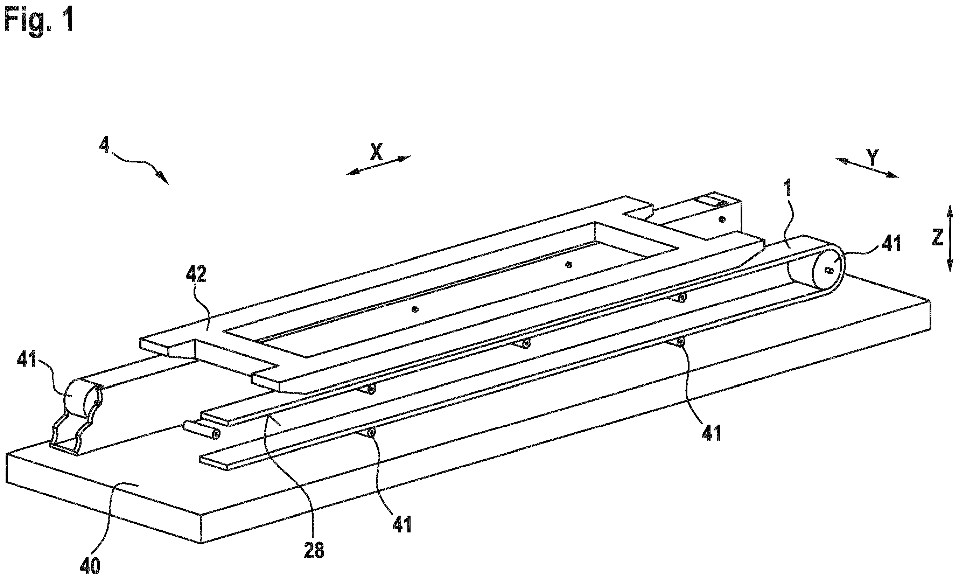

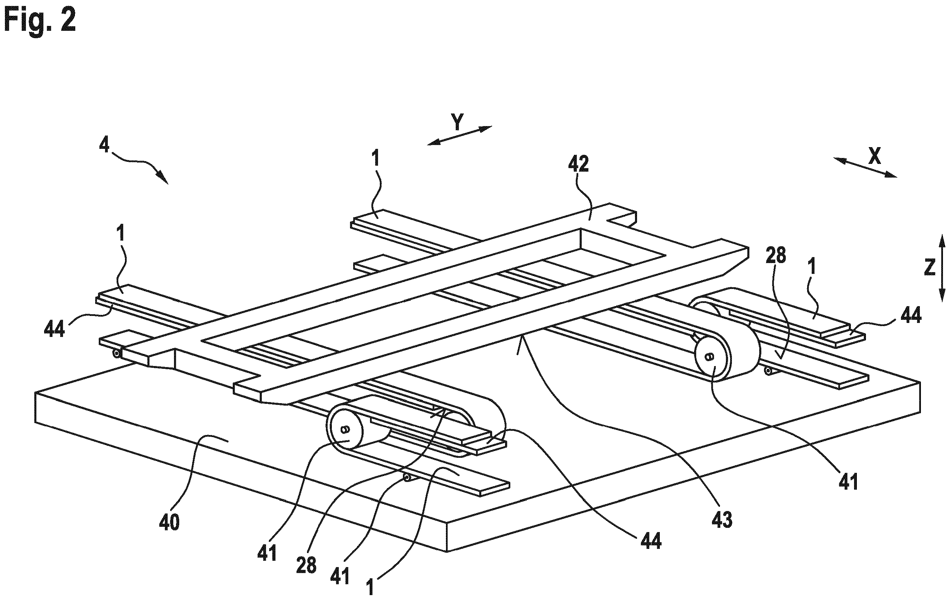

Die Fig. 1 zeigt eine perspektivische schematische Darstellung eines Transportsystems 4 mit einem erfindungsgemäßen Gurt 1 zur Bewegung eines Skids 42 in Längsrichtung X. Die Fig. 2 zeigt eine perspektivische schematische Darstellung eines Transportsystems 4 mit einem erfindungsgemäßen Gurt 1 zur Bewegung eines Skids 42 in Querrichtung Y.

Auf einem Untergrund 40 wie z.B. dem Boden einer Produktionshalle ist ein Transportsystem 4 angeordnet, welches zwei parallel zueinander angeordnete endlos geschlossene Gurte 1 als Transportbänder 1 aufweist. Die Gurte 1 erstrecken sich im Wesentlichen in einer Längsrichtung X und sind in einer Querrichtung Y, senkrecht zur Längsrichtung X, zueinander beabstandet. Die Gurte 1 werden durch Antriebs- und Führungsmittel 41 in Form von Antriebs-, Führungs- und Stützrollen 41 angetrieben, geführt bzw. gestützt (vgl. Fig. 1). Die Gurtunterseite 28 bzw. Gurtinnenseite 28 der Gurte 1 liegt dabei flächig auf einem gleitfähigen Untergrund 44 auf, der Bestandteil des Transportsystems 4 ist.

In der Höhe Z ist auf den Gurten 1 ein Transportkörper 42 in Form eines Werkstückträgers 42 z.B. zum Transport von Autokarosserien in der Fahrzeugfertigung angeordnet, der auch als Skid 42 bezeichnet werden kann. Der Skid 42 liegt mit den Unterseiten 43 seiner länglichen Träger wie z.B. seinen Kufen auf der Oberseite der Gurte 1, d.h. der Gurtaußenseite, auf. Durch die Reibung zwischen Unterseiten 43 der Kufen und Oberseiten der Gurte 1 kann der Skid 42 von den beiden Gurten 1 mitbewegt werden.

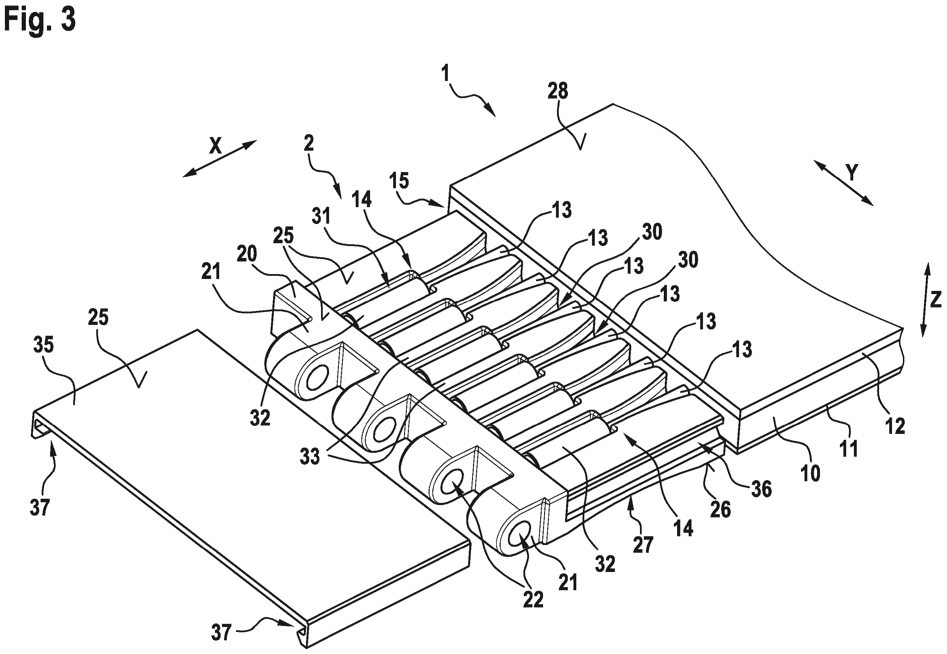

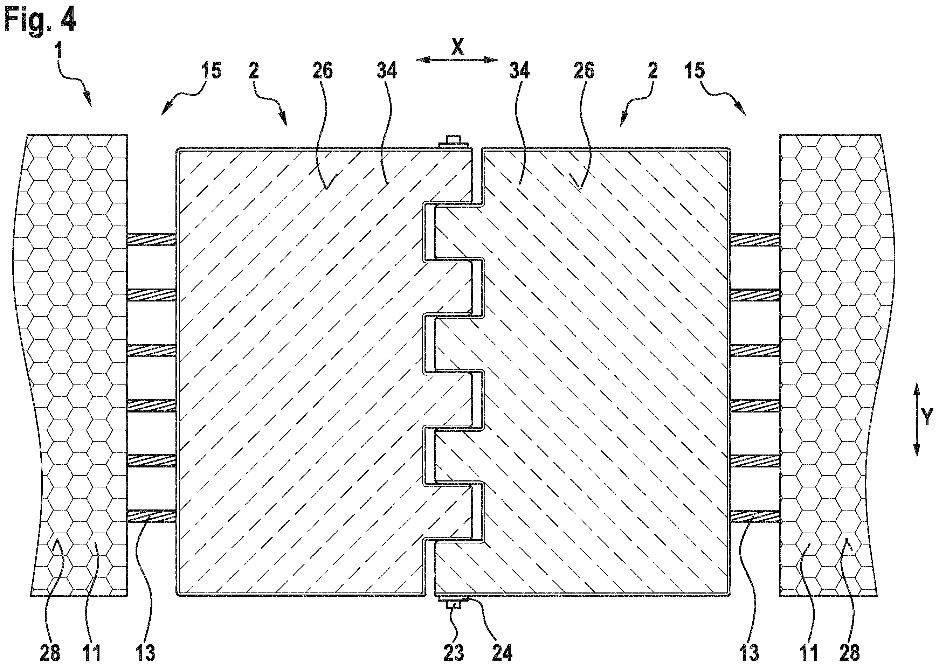

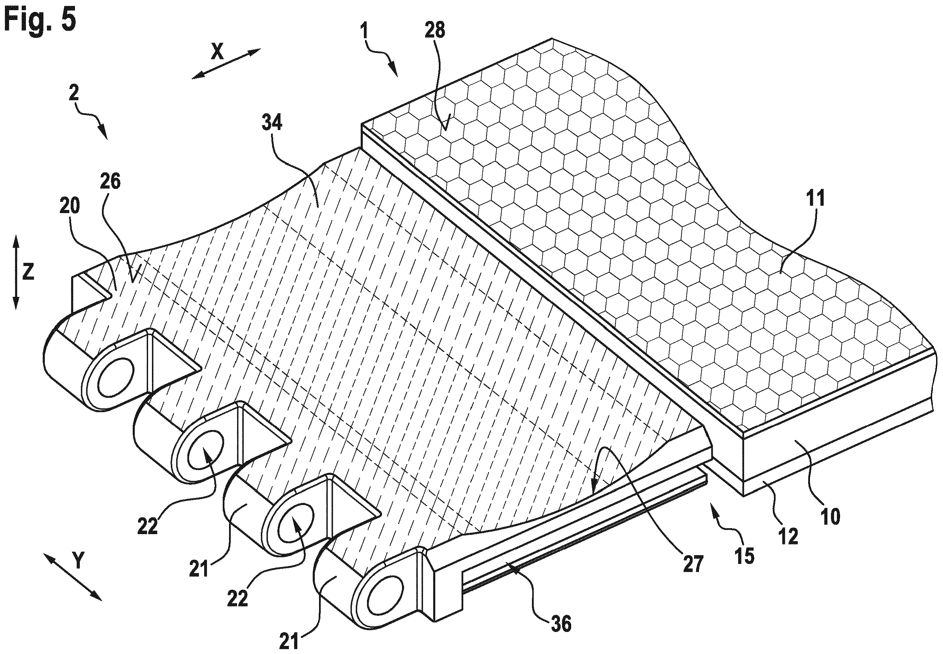

Die Fig. 3 zeigt eine perspektivische schematische Darstellung eines erfindungsgemäßen Verbindungselements 2. Die Fig. 4 zeigt eine schematische Draufsicht auf einen erfindungsgemäßen Gurt 1 mit gekoppelten Verbindungselementen 2 mit einem Gleitbelag 35 gemäß einer ersten Ausführungsform. Die Fig. 5 zeigt eine schematische perspektivische Ansicht von schräg oben auf ein einzelnes Gurtende 15 gemäß dem ersten Ausführungsbeispiel.

Das Verbindungselement 2 weist einen Grundkörper 20 auf, welcher aus einem harten oder härtbaren Stahl besteht. Der Grundkörper 20 weist an seiner einen Kante in Längsrichtung X mehrere zinnenartige Vorsprünge 21 auf, welche jeweils in Querrichtung Y verlaufende Querbohrungen 22 aufweisen.

Der Grundkörper 20 weist eine gurtäußere Seite 25 auf, welche grundsätzlich die Oberseite 25 des Grundkörpers 20 bildet. Der Grundkörper 20 weist ferner eine gurtinnere Seite 26 auf, welche die Unterseite 26 des Grundkörpers 20 bildet. Da der Grundkörper 20 aus Metall, insbesondere aus Stahl, besteht, weisen die Oberseite 25 und die Unterseite 26 des Grundkörpers 20 entsprechende metallische Reibeigenschaften auf.

Die Unterseite 26 des Gurtkörpers 20 weist eine Einbuchtung 27 auf, welche halbkreisförmig ausgebildet ist und in ihrem Radius dem äußeren Radius z.B. einer Trommel entspricht, um die der Gurt 1 umlaufend kann.

Das Verbindungselement 2 weist ferner eine Mehrzahl von Klemmkörperaufnahmen 31 auf, welche als rechteckige Aussparungen innerhalb des Grundkörpers 20 ausgebildet sind. Die einzelnen Klemmkörperaufnahmen 31 sind durch mehrere in Längsrichtung X ausgebildete Stege 33 geteilt ist. Die Stege 33 können Kräfte in Längsrichtung X übertragen und hierdurch einem Verzug des Verbindungselements 2 aufgrund von Belastungen in Längsrichtung X entgegenwirken.

Die Klemmkörperaufnahmen 31 sind zur Oberseite 25 und zur Unterseite 26 hin offen ausgebildet. Von der Klemmkörperaufnahmen 31 erstrecken sich mehrere Festigkeitsträgerdurchführungen 30 in Längsrichtung X in entgegengesetzter Richtung zu den zinnenartigen Vorsprüngen 21 durch den Grundkörper 20 hindurch und sind zum Gurt 1 hin aufgeweitet ausgebildet. Die Festigkeitsträgerdurchführungen 30 sind in Form von Nuten 30 ausgeführt. Jede Klemmkörperaufnahme 31 weist eine Festigkeitsträgerdurchführung 30 auf.

In den Klemmkörperaufnahmen 31 ist jeweils ein entsprechend geformter Klemmkörper 32 angeordnet. Innerhalb jedes Klemmkörpers 32 ist ein Ende 14 eines Festigkeitsträgers 13 in Form eines Stahlseils 13 durch Verpressen geklemmt. Die Stahlseile 13 sind hierzu an ihren Enden 14 von dem Material eines elastomeren Grundkörpers 10 des Gurtes 1 freigelegt bzw. freigelassen. Der Gurt 1 weist einen elastomeren Grundkörper 10 auf, welcher seinerseits in der Höhe Z eine untere gleitfähige Deckschicht 11 und eine obere elastomere Deckschicht 12 aufweist. Die freigelegten Enden 14 der Stahlseile 13 mit dem Klemmkörper 32 sowie dem Verbindungselement 2 bilden gemeinsam das Gurtende 15. Die beiden Verbindungselemente 2 zweier Gurtenden 15 desselben Gurts 1 oder zweier Gurtsegmente 1 sind mittels eines Kopplungsstabs 23 durch ihre Querbohrungen 22 miteinander gelenksartig verbunden. Der Kupplungsstab 23 wird in dieser Position in Querrichtung Y beidseitig durch Kopplungsstabsicherungen 24 gesichert.

Jedes Verbindungselement 2 weist eine Abdeckung 35 auf, welche den Bereich der Festigkeitsträgerdurchführungen 30 sowie Klemmkörperaufnahmen 31 zur Oberseite 25 des Grundkörpers 20 hin abdecken kann (Fig. 3). Hierdurch weisen die Abdeckungen 35 jeweils an ihren einander in Querrichtung Y gegenüberliegenden Kanten Rasthaken 37 auf, welche in Längsrichtung X verlaufen und aufeinander zu nach innen gerichtet sind. Die Grundkörper 20 weisen an ihren in Querrichtung Y außenliegenden Kanten entsprechende Rastaufnahmen 36 auf, welche in Längsrichtung X verlaufen und nach außen in Querrichtung Y ausgebildet sind. Die Rastaufnahmen 36 der Grundkörper 20 stellen Nuten dar, in welche die Rasthaken 37 der Abdeckungen 35 als Vorsprünge eingreifen können.

Die Abdeckungen 35 sind hierzu entsprechend elastisch ausgebildet, so dass sie entsprechend federnd aufgebogen werden können, um mit ihren Rasthaken 37 über die Kanten der Nuten 36 hinweg in diese eingreifen zu können. Die Rasthaken 37 können auf diese Weise auch wieder aus den Nuten 36 entfernt werden, um die Abdeckungen 35 abnehmen und die Festigkeitsträgerdurchführungen 30 und Klemmkörperaufnahmen 31 wieder freilegen und zugänglich machen zu können.

Die Abdeckungen 35 stellen auf diese Weise den wesentlichen Teil der gurtäußeren Seite 25 des Grundkörpers 20 dar. Hierzu sind die Grundkörper 20 in der Höhe Z gegenüber der Oberseite der oberen elastomeren Deckschicht 12 soweit zurückversetzt ausgebildet, dass die Dicke der Abdeckungen 35 in der Höhe Z auf den Grundkörpern 20 aufsetzen und mit der Höhe Z der Oberseite der oberen elastomeren Deckschicht 12 abschließt, so dass an den Stellen der Verbindung gar kein bzw. ein möglichst geringer Höhenunterschied vorliegt. Die äußeren Oberflächen 25 der Abdeckungen 35 bilden somit die gurtäußeren Seiten der Grundkörper 20, auf denen der Skid 42 belagert und mitbewegt werden kann.

Die äußeren Oberflächen 25 der Abdeckungen 35 weisen einen Reibwert auf, der möglichst gut dem Reibwert der Oberseite der oberen elastomeren Deckschicht 12 entspricht, wenigstens jedoch höher ist als der Reibwert der metallischen Grundkörper 20. Dies wird vorzugsweise durch das Material der Abdeckungen 35 wie z.B. Kunststoff erreicht. Dies kann alternativ oder zusätzlich durch die Beschaffenheit der Oberflächen 25 der Abdeckungen 35 wie z.B. Rillen oder dergleichen erreicht werden. Auf diese Weise kann nach außen gerichtet ein möglichst einheitliches Reibverhalten über die gesamte Länge des Gurtes 1 in Längsrichtung X erreicht werden. Insbesondere können unterschiedliche Reibpaarungen vermieden werden.

Erfindungsgemäß weist die Gurtinnenseite 28 der Verbindungselemente 2 jeweils eine Gleitbelag 34 auf, welcher jeweils auf der gurtinneren Seite 26 der Verbindungselemente 2 stoffschlüssig durch Kleben angeordnet ist. In diesem ersten Ausführungsbeispiel ist der Gleitbelag 34 so großflächig wie möglich auf der gurtinneren Seite 26 der Verbindungselemente 2 angeordnet, so dass er über die gesamte Breite in Querrichtung Y und so weit in Längsrichtung X aufgeklebt ist, dass auch die zinnenartigen Vorsprünge 21 wenigstens soweit abgedeckt werden, wie sie auch bei der Umlenkung des Gurts 1 in Kontakt mit einer Antriebs- oder Führungsrolle kommen können. Der Gleitbelag 34 passt sich hierbei der Einbuchtung 27 an. Der Gleitbelag 34 in diesem ersten Ausführungsbeispiel nach dem Verpressen der Klemmkörper 32 in den Klemmkörperaufnahmen 31 aufzukleben, um beim Verpressen nicht im Wege zu sein bzw. hierdurch nicht beschädigt zu werden.

Der Gleitbelag 34 ist durch seine Materialeigenschaften bzw. Oberflächenbeschaffenheit möglichst identisch hinsichtlich seines Reib- bzw. Gleitverhaltens wie die gleitfähige Gurtinnenseite 28 des Gurts 1 ausgestaltet, damit dieser Verbindungsbereich auf dem gleitfähigen Untergrund 44 des Transportsystems 4 möglichst ebenso gleiten kann wie der übrigen Bereich des Gurts 1.

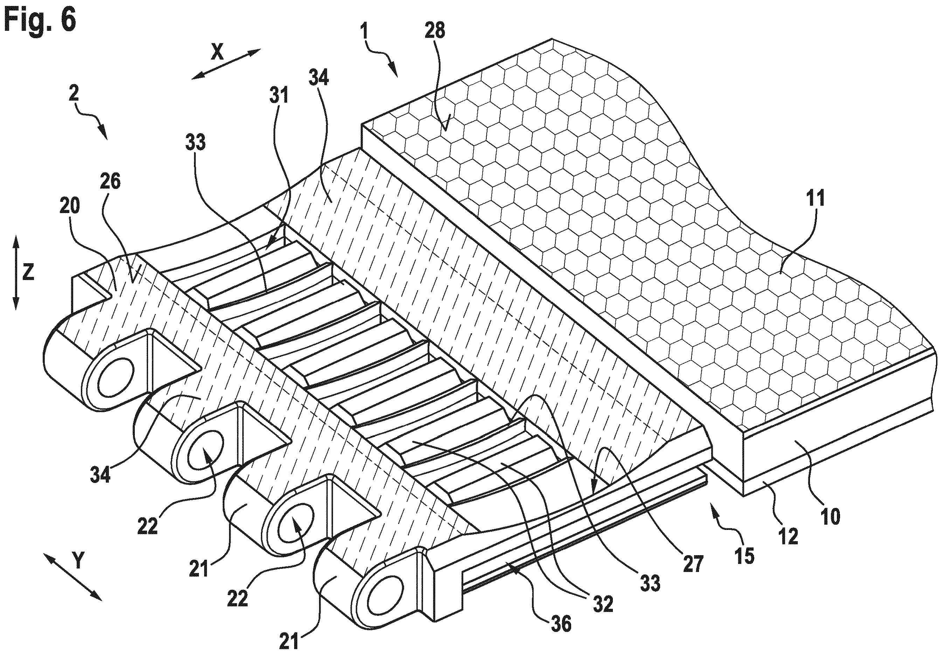

Die Figur 6 zeigt eine schematische perspektivische Ansicht von schräg oben auf ein einzelnes Gurtende 15 gemäß einem zweiten Ausführungsbeispiel. In diesem Fall ist der Gleitbelag 34 unterbrochen in zwei Bereichen angeordnet, so dass die Klemmkörperaufnahmen 31 von unten frei bleiben. Auf diese Weise kann ein Verpressen der Klemmkörper 32 im Verbindungselement 2 von unten erfolgen, ohne den Gleitbelag 34 zu beschädigen oder hierfür wieder entfernen zu müssen. Hierdurch kann der geteilte Gleitbelag 34 bereits vorab auf dem Verbindungselement 2 vorgesehen werden, was seine Haltbarkeit erhöhen kann. Hierbei den Bereich der Einbuchtung 27, in der auch die Klemmkörperaufnahmen 31 angeordnet sind, freilassen zu müssen ist für die Funktion des Gleitbelags 34 vergleichsweise unbedeutend, weil aufgrund der Einbuchtung 27 in diesem Bereich bei Druck der Kufen 43 des Skids 42 ohnehin kein bzw. kaum Kontakt zum gleitfähigen Untergrund 44 zu erwarten ist.

### Bezugszeichenliste

### (Teil der Beschreibung)

- X: Längsrichtung des Gurtes 1 bzw. Gurtsegments 1
- Y: Querrichtung bzw. Breite des Gurtes 1 bzw. Gurtsegments 1
- Z: Höhe bzw. Dicke des Gurtes 1 bzw. Gurtsegments 1

- 1: Gurt bzw. Gurtsegment, Transportband
- 10: elastomerer Grundkörper
- 11: untere gleitfähige Deckschicht
- 12: obere elastomere Deckschicht
- 13: Festigkeitsträger bzw. Stahlseile
- 14: Ende der Festigkeitsträger 13
- 15: Gurtende bzw. Gurtsegmentende

- 2: Verbindungselemente
- 20: Grundkörper
- 21: zinnenartige Vorsprünge
- 22: Querbohrungen der zinnenartigen Vorsprünge 21
- 23: Kopplungsstab
- 24: Kopplungsstabsicherung
- 25: gurtäußere Seite bzw. Oberseite des Grundkörpers 20 bzw. des Verbindungselements 2
- 26: gurtinnere Seite bzw. Unterseite des Grundkörpers 20 bzw. des Verbindungselements 2
- 27: Einbuchtung der Unterseite 26
- 28: Gurtinnenseite, Gurtunterseite

- 30: Festigkeitsträgerdurchführung des Grundkörpers 20, Nut
- 31: Klemmkörperaufnahme
- 32: Klemmkörper, Hülsen
- 33: Stege des Grundkörpers 20 in Längsrichtung X
- 34: Gleitbelag, Gleitbeschichtung der gurtinnere Seite 26 des Verbindungselements 2
- 35: Abdeckung
- 36: Rastaufnahme für Abdeckung 35
- 37: Rasthaken der Abdeckung 35

- 4: Transportsystem
- 40: Untergrund, Boden
- 41: Gurtantriebs- und -führungsmittel, Antriebs-, Führungs- und Stützrollen
- 42: Transportkörper, Werkstückträger, Karosserieträger, Skid (Ladegestell)
- 43: Unterseite des Skids 42 bzw. der Kufen des Skids 42
- 44: gleitfähiger Untergrund des Transportsystems 4

## Patentansprüche

1. Gurt (1) oder Gurtsegment (1), mit
einer Mehrzahl von in Längsrichtung (X) verlaufenden und parallel zueinander angeordneten Festigkeitsträgern (13), und
einem Verbindungselement (2), welches ein Ende (15) des Gurtes (1) bzw. des Gurtsegments (1) bildet und zur Verbindung mit einem weiteren Verbindungselement (2) des anderen Endes (15) des Gurts (1) bzw. mit einem Ende (15) eines weiteren Gurtsegments (1) ausgebildet ist,
wobei die Enden (14) der Festigkeitsträger (13) von dem Verbindungselement (2) gehalten werden,
**dadurch gekennzeichnet, dass**
das Verbindungselement (2) an seiner gurtinneren Seite (26) zumindest abschnittsweise einen Reibwert aufweist, welcher nach innen hin geringer als der Reibwert des Verbindungselements (2) an sich ist.

2. Gurt (1) oder Gurtsegment (1) gemäß Anspruch 1,
wobei der Reibwert der gurtinneren Seite (26) des Verbindungselements (2) zumindest abschnittsweise dem Reibwert der Gurtinnenseite (28) entspricht.

3. Gurt (1) oder Gurtsegment (1) gemäß Anspruch 1 oder 2,
wobei das Verbindungselement (2) einen Gleitbelag (35) aufweist, welcher zumindest abschnittsweise, vorzugsweise im Wesentlichen, vorzugsweise vollständig, die gurtinnere Seite (26) des Verbindungselements (2) bildet und welcher den vorbestimmten Reibwert aufweist.

4. Gurt (1) oder Gurtsegment (1) gemäß Anspruch 3,
wobei der Gleitbelag (35) stoffschlüssig von dem Verbindungselement (2) gehalten werden kann.

5. Gurt (1) oder Gurtsegment (1) gemäß einem der vorherigen Ansprüche,
wobei die Enden (14) der Festigkeitsträger (13) mit wenigstens einem Klemmkörper (32) kraftschlüssig verbunden werden können,
wobei der Klemmkörper (32) von dem Verbindungselement (2) wenigstens in Längsrichtung (X) formschlüssig gehalten werden kann.

6. Gurt (1) oder Gurtsegment (1) gemäß Anspruch 5,
wobei das Verbindungselement (2) wenigstens eine Klemmkörperaufnahme (31) aufweist, in der wenigstens ein mit einem Klemmkörper (32) versehenes Ende (14) eines Festigkeitsträgers (13) aufgenommen und wenigstens in Längsrichtung (X) formschlüssig gehalten werden kann.

7. Gurt (1) oder Gurtsegment (1) gemäß Anspruch 6,
wobei die gurtinnere Seite (26) des Verbindungselements (2) im Bereich der Klemmkörperaufnahme (31) frei von dem Gleitbelag (35) ist.

8. Gurt (1) oder Gurtsegment (1) gemäß Anspruch 6 oder 7,
wobei das Verbindungselement (2) wenigstens zwei Klemmkörperaufnahmen (31) aufweist, in denen jeweils wenigstens ein mit einem Klemmkörper (32) versehenes Ende (14) eines Festigkeitsträgers (13) aufgenommen und wenigstens in Längsrichtung (X) formschlüssig gehalten werden kann,
wobei die beiden Klemmkörperaufnahmen (31) in Querrichtung (Y) durch einen in Längsrichtung (X) verlaufenden Steg (33) voneinander getrennt sind.

9. Gurt (1) oder Gurtsegment (1) gemäß einem der Ansprüche 7 oder 8,
wobei das Verbindungselement (2) wenigstens eine Festigkeitsträgerdurchführung (30) aufweist, durch die wenigstens ein Festigkeitsträger (13) in Längsrichtung (X) in eine Klemmkörperaufnahme (31) geführt werden kann.

10. Gurt (1) oder Gurtsegment (1) gemäß Anspruch 9,
wobei die Festigkeitsträgerdurchführung (30) als Bohrung (30) oder als Nut (30) durch das Verbindungselement (2) ausgebildet ist.

11. Gurt (1) oder Gurtsegment (1) gemäß einem der Ansprüche 6 bis 10,
wobei eine Abdeckung (35) die Nut (30) und/oder die Klemmkörperaufnahme (31) senkrecht zur Längsrichtung (X) von der gurtäußeren Seite (25) des Verbindungselements (20) verschließen kann.

12. Gurt (1) oder Gurtsegment (1) gemäß einem der Ansprüche 9 bis 11,
wobei die Festigkeitsträgerdurchführung (30) in Längsrichtung (X) in entgegengesetzter Richtung zu den Enden (14) der Festigkeitsträger (13) aufgeweitet ausgebildet ist.

13. Gurt (1) oder Gurtsegment (1) gemäß einem der vorherigen Ansprüche,
wobei der Gurt (1) bzw. das Gurtsegment (1) einen elastomeren Grundkörper (10) aufweist, in dem die Festigkeitsträger (13) eingebettet sind,
wobei die Enden (14) der Festigkeitsträger (13) von dem Material des elastomeren Grundkörpers (10) freigelegt und/oder freigelassen sind.

14. Gurt (1) oder Gurtsegment (1) gemäß einem der vorherigen Ansprüche,
wobei das Verbindungselement (2) an seiner gurtinneren Seite (26) eine halbkreisförmige Einbuchtung (27) aufweist.

## Claims

1. Belt (1) or belt segment (1), having
a plurality of reinforcement members (13) which extend in the longitudinal direction (X) and are arranged parallel to one another, and
a connecting element (2) which forms one end (15) of the belt (1) or belt segment (1) and is configured for connection to a further connecting element (2) of the other end (15) of the belt (1) or to one end (15) of a further belt segment (1),
wherein the ends (14) of the reinforcement members (13) are held by the connecting element (2),
**characterized in that**,
at its inner belt side (26), the connecting element (2) at least sectionally has a coefficient of friction which, to the inside, is lower than the intrinsic coefficient of friction of the connecting element (2).

2. Belt (1) or belt segment (1) according to Claim 1,
wherein the coefficient of friction of the inner belt side (26) of the connecting element (2) at least sectionally corresponds to the coefficient of friction of the belt inner side (28).

3. Belt (1) or belt segment (1) according to Claim 1 or 2, wherein the connecting element (2) has a sliding lining (35) which at least sectionally, preferably substantially, preferably completely, forms the inner belt side (26) of the connecting element (2) and which has the predetermined coefficient of friction.

4. Belt (1) or belt segment (1) according to Claim 3,
wherein the sliding lining (35) can be held in a materially bonded manner by the connecting element (2).

5. Belt (1) or belt segment (1) according to one of the preceding claims,
wherein the ends (14) of the reinforcement members (13) can be connected in a force-fitting manner to at least one clamping body (32),
wherein the clamping body (32) can be held in a form-fitting manner by the connecting element (2) at least in the longitudinal direction (X).

6. Belt (1) or belt segment (1) according to Claim 5,
wherein the connecting element (2) has at least one clamping-body receptacle (31) in which at least one end (14), provided with a clamping body (32), of a reinforcement member (13) can be received and, at least in the longitudinal direction (X), can be held in a form-fitting manner.

7. Belt (1) or belt segment (1) according to Claim 6,
wherein the inner belt side (26) of the connecting element (2) is free of the sliding lining (35) in the region of the clamping-body receptacle (31).

8. Belt (1) or belt segment (1) according to Claim 6 or 7,
wherein the connecting element (2) has at least two clamping-body receptacles (31) in which in each case at least one end (14), provided with a clamping body (32), of a reinforcement member (13) can be received and, at least in the longitudinal direction (X), can be held in a form-fitting manner,
wherein the two clamping-body receptacles (31) are separated from one another in the transverse direction (Y) by a web (33) which extends in the longitudinal direction (X).

9. Belt (1) or belt segment (1) according to either of Claims 7 and 8,
wherein the connecting element (2) has at least one reinforcement-member leadthrough (30) through which at least one reinforcement member (13) can be passed in the longitudinal direction (X) into a clamping-body receptacle (31).

10. Belt (1) or belt segment (1) according to Claim 9,
wherein the reinforcement-member leadthrough (30) is in the form of a bore (30) or in the form of a groove (30) through the connecting element (2).

11. Belt (1) or belt segment (1) according to one of Claims 6 to 10,
wherein a cover (35) can close off the groove (30) and/or the clamping-body receptacle (31) perpendicularly to the longitudinal direction (X) from the outer belt side (25) of the connecting element (20).

12. Belt (1) or belt segment (1) according to one of Claims 9 to 11,
wherein the reinforcement-member leadthrough (30) is configured to widen in the longitudinal direction (X) in the opposite direction to the ends (14) of the reinforcement members (13).

13. Belt (1) or belt segment (1) according to one of the preceding claims,
wherein the belt (1) or belt segment (1) has an elastomer main body (10) in which the reinforcement members (13) are embedded,
wherein the ends (14) of the reinforcement members (13) are exposed and/or left free by the material of the elastomer main body (10).

14. Belt (1) or belt segment (1) according to one of the preceding claims,
wherein the connecting element (2) has a semicircular recess (27) at its inner belt side (26).

## Revendications

1. Courroie (1) ou segment de courroie (1), ayant
une pluralité de supports de renforcement (13) s'étendant dans la direction longitudinale (X) et agencés parallèlement les uns aux autres, et
un élément de liaison (2) qui forme une extrémité (15) de la courroie (1) ou du segment de courroie (1) et qui est conçu pour une liaison avec un autre élément de liaison (2) de l'autre extrémité (15) de la courroie (1) ou avec une extrémité (15) d'un autre segment de courroie (1),
les extrémités (14) des supports de renforcement (13) étant maintenues par l'élément de liaison (2),
**caractérisée en ce que**
l'élément de liaison (2) présente sur son côté intérieur de courroie (26), au moins par sections, un coefficient de frottement qui est plus faible vers l'intérieur que le coefficient de frottement de l'élément de liaison (2) lui-même.

2. Courroie (1) ou segment de courroie (1) selon la revendication 1,
dans laquelle le coefficient de frottement du côté intérieur (26) de courroie de l'élément de liaison (2) correspond, au moins par sections, au coefficient de frottement du côté intérieur (28) de la courroie.

3. Courroie (1) ou segment de courroie (1) selon la revendication 1 ou la revendication 2, dans laquelle l'élément de liaison (2) présente une garniture de glissement (35) qui forme au moins partiellement, de préférence essentiellement, de préférence complètement, le côté intérieur (26) de l'élément de liaison (2) et qui présente le coefficient de frottement prédéterminé.

4. Courroie (1) ou segment de courroie (1) selon la revendication 3,
dans laquelle la garniture de glissement (35) est apte à être maintenue par l'élément de liaison (2) par liaison de matières.

5. Courroie (1) ou segment de courroie (1) selon l'une des revendications précédentes,
dans laquelle les extrémités (14) des supports de renforcement (13) sont aptes à être reliées par adhérence à au moins un corps de serrage (32),
le corps de serrage (32) étant apte à être maintenu par l'élément de liaison (2) par complémentarité de forme au moins dans la direction longitudinale (X).

6. Courroie (1) ou segment de courroie (1) selon la revendication 5,
dans laquelle l'élément de liaison (2) présente au moins un logement (31) de corps de serrage dans lequel au moins une extrémité (14) d'un support de renforcement (13) pourvue d'un corps de serrage (32) est apte à être reçue et maintenue par complémentarité de forme au moins dans la direction longitudinale (X).

7. Courroie (1) ou segment de courroie (1) selon la revendication 6,
dans laquelle la face intérieure (26) de courroie de l'élément de liaison (2) étant exempte de la garniture de glissement (35) dans la zone du logement (31) du corps de serrage.

8. Courroie (1) ou segment de courroie (1) selon la revendication 6 ou la revendication 7,
dans laquelle l'élément de liaison (2) présente au moins deux logements de corps de serrage (31) dans chacun desquels au moins une extrémité (14) d'un support de renforcement (13) pourvue d'un corps de serrage (32) est apte à être reçue et maintenue par complémentarité de formes au moins dans la direction longitudinale (X),
les deux logements de corps de serrage (31) étant séparés l'un de l'autre dans la direction transversale (Y) par une entretoise (33) s'étendant dans la direction longitudinale (X).

9. Courroie (1) ou segment de courroie (1) selon l'une des revendications 7 ou 8,
dans laquelle l'élément de liaison (2) présente au moins un passage (30) de support de renforcement à travers lequel au moins un support de renforcement (13) est apte à être guidé dans la direction longitudinale (X) dans un logement (31) de corps de serrage.

10. Courroie (1) ou segment de courroie (1) selon la revendication 9,
dans laquelle le passage (30) de support de renforcement est réalisé sous la forme d'un alésage (30) ou d'une rainure (30) à travers l'élément de liaison (2).

11. Courroie (1) ou segment de courroie (1) selon l'une des revendications 6 à 10,
dans laquelle un couvercle (35) est apte à fermer la rainure (30) et/ou le logement (31) de corps de serrage perpendiculairement à la direction longitudinale (X) depuis le côté extérieur (25) de courroie de l'élément de liaison (20).

12. Courroie (1) ou segment de courroie (1) selon l'une des revendications 9 à 11,
dans laquelle le passage (30) de support de renforcement est évasé dans la direction longitudinale (X) en direction opposée aux extrémités (14) du support de renforcement (13).

13. Courroie (1) ou segment de courroie (1) selon l'une des revendications précédentes,
la courroie (1) ou le segment de courroie (1) présentant un corps de base (10) en élastomère dans lequel sont noyés les supports de renforcement (13),
les extrémités (14) des supports de renforcement (13) étant dégagées et/ou laissées libres par le matériau du corps de base élastomère (10).

14. Courroie (1) ou segment de courroie (1) selon l'une des revendications précédentes,
dans laquelle l'élément de liaison (2) présente un renfoncement semi-circulaire (27) sur son côté intérieur (26) à la courroie.
